# EUROPÄISCHE PATENTSCHRIFT

(11) **EP 1 995 135 B1**
(45) Veröffentlichungstag und Bekanntmachung des Hinweises auf die Patenterteilung: **09.02.2011**
(21) Anmeldenummer: 08008911.3
(22) Anmeldetag: 14.05.2008
(51) Int. Cl.: B60T 7/20, B60T 11/04, F16C 1/12, F16C 1/22, F16C 1/26

(54) **Seilzug mit Löseeinrichtung**
Cable winch with release device
Câble de commande doté d'un dispositif de libération

(30) Priorität: 15.05.2007 DE 202007006998 U
(43) Veröffentlichungstag der Anmeldung: 26.11.2008
(73) Patentinhaber: AL-KO Kober AG, 89359 Kötz (DE)
(72) Erfinder: Kainzner, Christoph, 6284 Ramsau im Zillertal (AT)
(74) Vertreter: Ernicke, Klaus Stefan

(56) Entgegenhaltungen:
- EP-A- 1 795 411
- DE-A1-102006 009 086
- JP-A- 2004 161 192
- US-A- 3 729 070
- US-A1- 2003 047 393

## Beschreibung

Die Erfindung betrifft einen Seilzug für eine Bremseinrichtung von Fahrzeugen, insbesondere eine Feststellbremse, mit den Merkmalen im Oberbegriff des Hauptanspruchs.

Derartige Bremsseilzüge sind aus der Praxis bekannt. Sie bestehen aus einem Zugseil und einem umgebenden Mantel, der mit seinen Enden relativ ortsfest angeordnet ist und die bei der Zugseilbetätigung auftretenden Kräfte abstützt. Bei Bremseinrichtungen können bei gespanntem Seilzug Blockadeprobleme auftreten, die sich nicht ohne weiteres beseitigen lassen, insbesondere wenn eine motorische Betätigungseinrichtung, z.B. bei einer elektromechanischen Feststellbremse, in Blockadestellung geht.

Die US 3,729,070 A offenbart einen manuell betätigbaren Lösemechanismus für Not- und Parkbremsen, bei denen der aus einem Seil und einer umgebenden Hülle bestehende Seilzug an einer Seite mit einem federbelasteten Zylinder verbunden ist. Die Seilzughülle ist dabei mit ihrem Mantelanschluss an einem Lösemechanismus befestigt, der seinerseits am Zylindergehäuse angeordnet ist, wobei das aus dem Mantelanschluss austretende Seil in den Zylinder geführt und an der Kolbenstange befestigt ist. Der Lösemechanismus weist eine Schiebehülse auf, an welcher der Mantelanschluss befestigt ist, wobei die Schiebehülse im Blockadefall mit einem Bajonettverschluss entriegelt und in das Zylindergehäuse geschoben werden kann.

Die JP 2004-161192 A befasst sich mit dem Anspannen der Seilseele eines Seilzugs durch einen Elektromotor, der über ein mehrstufiges Getriebe eine Spannscheibe bzw. eine Wickelscheibe dreht. Durch einen als Klauenkupplung ausgebildeten Bremsenmechanismus wird das Motormoment auf die Spannscheibe übertragen oder nicht.

Die US 2003/047393 A1 zeigt eine mechanische Löseeinrichtung für eine elektrische Parkbremse. Der Bremsseilzug ist in zwei Kabel unterteilt, deren Seelen in einer Löseeinrichtung in einem vorgegebenen Abstand zueinander gehalten werden. Zum Lösen im Blockadefall kann der Abstand der Kabelseelen vergrößert werden.

Die nachveröffentlichte DE 10 2006 009 986 A1 offenbart eine Notlösevorrichtung für eine Feststellbremse, wobei die Notlösevorrichtung auf die Seilseelen von Bremsseilzügen einwirkt.

In der ebenfalls nachveröffentlichten EP 1 795 411 A2 geht es ebenfalls um eine Entlastung der Seilseelen eines Seilzugs, die mit einer Spindelmutter und einem Spindeltrieb verbunden sind.

Es ist Aufgabe der vorliegenden Erfindung, einen verbesserten Seilzug und eine hiermit ausgerüstete Bremseinrichtung aufzuzeigen.

Die Erfindung löst diese Aufgabe mit den Merkmalen im Hauptanspruch.
Die Löseeinrichtung des Seilzugs hat den Vorteil, dass ein verspannter Seilzug gelöst und weich gemacht werden kann. Dies kann unterschiedlichen Zwecken dienen. Z.B. kann eine etwaige Blockadestellung der Bremseinrichtung gelöst werden, ohne dass hierfür ein Eingriff an den Radbremsen oder an der Betätigungseinrichtung, z.B. einem elektromotorischen Antrieb, erfolgen muss. Der gelöste oder entspannte Seilzug erlaubt ein Lösen der Radbremsen und eine Weiterfahrt des Fahrzeugs. Die Blockadeursache oder eine anderweitige Störung können zu einem späteren Zeitpunkt und in einer besser geeigneten Weise behoben werden. In solchen Situationen kann die Löseeinrichtung die Funktion einer Notentriegelung haben. Nach Behebung der Störung kann durch Schließen der Löseeinrichtung die normale Seilzugfunktion wieder hergestellt werden. Eine Neueinstellung des Seilzugs ist hierbei in der Regel nicht erforderlich.

Die Löseeinrichtung kann auch zu anderen Zwecken eingesetzt werden, wenn ein gespannter Seilzug gelöst und entspannt werden soll.

Die Löseeinrichtung kann unterschiedlich ausgebildet sein. In der bevorzugten Ausführungsform enthält sie eine Entlastungseinrichtung, mit der der Mantel des Seilzugs bei Bedarf entspannt und in seiner Länge verkürzt werden kann. Das Seil des Seilzugs braucht hierbei nicht angetastet zu werden und braucht insbesondere nicht von den Radbremsen und der Betätigungseinrichtung gelöst zu werden.

Die Entlastungseinrichtung lässt sich an beliebiger Stelle des Seilzugs anbringen. Dies kann innerhalb des Seilzugs an einer beliebig geeigneten Stelle sein. Die Entlastungseinrichtung kann aber auch an den Seilzugenden und im Anschlussbereich an die Betätigungseinrichtung oder die Radbremse angeordnet sein. Dies vereinfacht den Bauaufwand, weil der Mantel nur an einer Seite der Entlastungseinrichtung zu befestigen ist. Eine Entlastungseinrichtung kann auch mehrfach in einem Seilzug vorhanden sein. Diese Positionierfreiheit erlaubt es, die Entlastungseinrichtung an günstigen und gut zugänglichen Stellen im Verlegeraum des Seilzugs anzuordnen.

Günstig sind die kleine und schlanke Bauform sowie der geringe Bauaufwand der Entlastungseinrichtung. Hervorzuheben sind ferner die einfache und betriebssichere Konstruktion sowie die einfache Bedienbarkeit.

Die Entlastungseinrichtung ist im Normalbetrieb des Seilzugs gesichert, z.B. durch ein kraft- und/oder formschlüssiges Halteelement mit Rückstellfeder, und bedarf für ihre Funktion einer besonderen Betätigung. Eine hülsenförmige Gestaltung des Halteelements hat Vorteile hinsichtlich einfacher Bauweise und Betriebssicherheit. Die Beweglichkeit des Halteelements kann über eine Schiebeführung oder eine Schwenkführung bewirkt werden, wobei letztere besondere Vorteile für eine betriebssichere Kinematik und Funktion hat.

Die Entlastungseinrichtung kann manuell bedient und geöffnet werden. Sie kann dazu vor Ort direkt oder alternativ fernbedient werden. Hierfür ist es günstig, wenn die Entlastungseinrichtung eine automatische Öffnungsfunktion besitzt, die bei Betätigung einer Sicherungseinrichtung ausgelöst wird. Die Entlastungseinrichtung kann auch leicht und sicher wieder in ihre geschlossene Betriebsstellung gebracht werden. Sie ist außerdem unempfindlich gegen Umwelteinflüsse und funktioniert auch nach langer Nichtbenutzung zuverlässig.

Die Entlastungseinrichtung kann eine geteilte Mantelfassung mit einem lösbaren Distanzteil zwischen den Fassungsteilen aufweisen, welches in Betriebsstellung die Fassungsteile über dem Seil auf einem festen Abstand hält und damit den Mantel stabilisiert und verfestigt. Bei einem Lösen oder Entfernen des Distanzteils können sich die Fassungsteile längs des Seils relativ zueinander bewegen und dadurch die wirksame Mantellänge verkürzen.

Die Fassungsteile und das Distanzteil können in beliebig geeigneter Weise ausgebildet sein. In den Unteransprüchen ist hierfür eine besonders bevorzugte Ausführungsform angegeben. Mittels der besagten Sicherungseinrichtung kann das Distanzteil in der Betriebsstellung gehalten oder freigegeben werden.

Eine Ausbildung des Distanzteils als schwenkbarer Hebel hat verschiedene Vorteile. Einerseits bleibt er in der Lösestellung mit der Entlastungseinrichtung unverlierbar verbunden. Andererseits bietet ein Schwenkhebel genau definierte Betriebs- und Lösestellungen und eine hohe Betriebssicherheit. Durch eine lösegünstige Anschrägung seiner Stirnseite und einer zugehörigen Hebelauflage an einem Fassungsteil kann außerdem die vorher erwähnte automatische Lösefunktion etabliert werden. Die Entlastungseinrichtung mit ihren Teilen und insbesondere mit ihrem Schwenkhebel lässt sich auch wieder leicht in ihre Betriebsstellung bringen und dort fixieren. Hierfür ist die Ausbildung der Sicherungseinrichtung mit einer federbelasteten Hülse von Vorteil.

Bei der gegenseitigen Annäherung der Fassungsteile im Lösefall kann über einen Vorsprung und eine zugehörige Aufnahmeöffnung an den Fassungsteilen eine definierte und geführte Annährungsbewegung erfolgen. Außerdem bleibt das innenliegende Seil dabei schützend vom Vorsprung umgeben und wird nicht unnötig belastet. Eine den Vorsprung umgebende elastische Schutzhülle, z.B. ein Faltenbalg, schützt die gesamte bewegliche Anordnung gegen äußere Umwelteinflüsse und sichert die Betriebsbereitschaft und Funktionsfähigkeit der Entlastungseinrichtung. Insbesondere wird eine Verschmutzung der Fassungsteile im Bewegungsbereich vermieden. Die Gestaltung des Distanzteils und insbesondere des Schwenkhebels mit einem im wesentlichen U-förmigen Mantel hat hierbei den weiteren Vorteil, dass auch die Schutzhülle von einem steifen Bauteil weitgehend umfasst und gegen äußere Belastungen, insbesondere mechanische Belastungen, geschützt werden kann. Die Entlastungseinrichtung lässt sich dadurch auch an Stellen unterbringen, die im Fahrbetrieb äußeren Einflüssen, z.B. Spritzwasser, Steinschlag oder dergl. ausgesetzt sind.

In den Unteransprüchen sind weitere vorteilhafte Ausgestaltungen der Erfindung angegeben.

Die Erfindung ist den Zeichnungen beispielsweise und schematisch dargestellt. Im Einzelnen zeigen:
- Figur 1:: ein Kraftfahrzeug mit einer elektromechanischen Feststellbremse, einem Seilzug und einer Löseeinrichtung,
- Figur 2:: einen Anhänger mit einer anderen Bremseinrichtung und zwei Löseeinrichtungen,
- Figur 3:: eine perspektivische Ansicht einer als Entlastungseinrichtung für den Seilzugmantel ausgebildeten Löseeinrichtung mit einem Distanzteil in verschiedenen Betriebsstellungen,
- Figur 4:: eine Explosionsdarstellung der Entlastungseinrichtung und ihrer Bauteile,
- Figur 5 und 6:: Längsschnitte durch die Entlastungseinrichtung in Löse- und Betriebsstellung,
- Figur 7:: eine perspektivische Draufsicht auf eine bereichsweise aufgeschnittene Entlastungseinrichtung,
- Figur 8 und 9:: eine Entlastungseinrichtung mit einer Sicherungseinrichtung und mit verschiedenen Betätigungseinrichtungen hierfür,
- Figur 10:: eine Variante der Entlastungseinrichtung in Explosionsdarstellung,
- Figur 11 und 12:: eine Draufsicht und einen Längsschnitt XII-XII der Entlastungseinrichtung von Figur 10,
- Figur 13 bis 16:: perspektivische und Seitenansichten der Entlastungseinrichtung in Öffnung- und Schließstellung und
- Figur 17:: eine Stirnansicht der Entlastungseinrichtung.

Die Erfindung betrifft einen Seilzug (6) für eine Bremseinrichtung (2) von Fahrzeugen (1) und auch die damit ausgerüstete Bremseinrichtung (2).

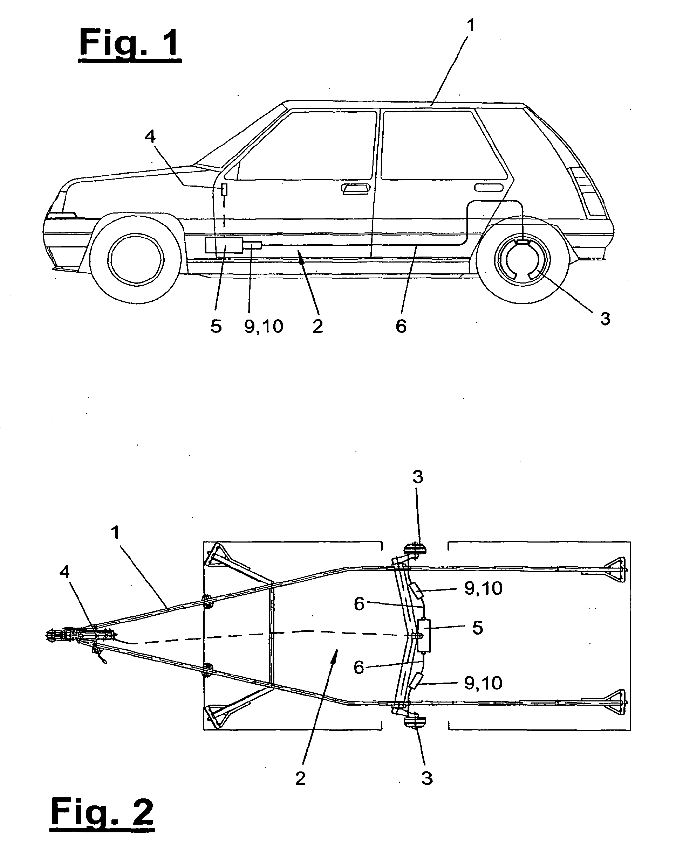

Figur 1 zeigt schematisch ein Fahrzeug (1) in Form eines Kraftfahrzeugs mit einer Bremseinrichtung (2), die in diesem Ausführungsbeispiel als elektromechanische Feststellbremse oder Parkbremse ausgebildet ist. Sie besteht aus einem Auslöser (4), z.B. einem elektrischen Schalter oder Taster, der eine Betätigungseinrichtung (5) mit einem elektromotorischen Antrieb ansteuert, welche über ein oder mehrere Seilzüge (6) ein oder mehrere Radbremsen (3) betätigt. Der Seilzug (6) besteht aus einem innen liegenden und auf Zug belastbaren Seil (8) sowie einem umgebenden druckfesten Mantel (7), der an beiden Enden relativ ortsfest befestigt ist. Über das Seil (8) werden die Stell- und Spannkräfte der Betätigungseinrichtung (5) auf die Radbremsen (3) übertragen und über den Mantel (7) abgestützt.

Im oder am Seilzug (6) ist eine Löseeinrichtung (9) angeordnet, die ein Entspannen des Seilzugs (6) ermöglicht. Dies kann z.B. in einem Blockadefall erforderlich sein, wenn die Betätigungseinrichtung (5) die Radbremsen (3) gespannt hat und durch Stromausfall oder aus anderen Gründen in eine Blockadestellung geht. In diesem Fall können durch die Löseeinrichtung (9) der Seilzug (6) und die Radbremsen (3) entspannt werden. Eine Entspannung des Seilzugs (6) kann auch bei einem Blockieren der Radbremsen (3) erfolgen. In diesen Blockadefällen hat die Löseeinrichtung (9) die Funktion einer Notentriegelung. Ein Entspannen des Seilzugs (6) kann alternativ bei anderen Störungen oder auch in beliebigen anderen Fällen sinnvoll oder erforderlich und über die Löseeinrichtung (9) durchführbar sein.

Figur 2 zeigt eine Variante des Fahrzeugs (1) und seiner Bremseinrichtung (2). Das Fahrzeug (1) ist hier als Anhänger mit ein oder mehreren Achsen, einem Fahrgestell, einer Zugdeichsel und einem Anhängekopf ausgebildet. Die Bremseinrichtung (2) kann in verschiedener Weise ausgebildet sein. Es kann sich einerseits um die Betriebsbremse, z.B. um eine Auflaufbremse, handeln, die mechanisch betätigt wird. Alternativ oder zusätzlich kann eine Handbremseinrichtung oder Feststellbremseinrichtung vorhanden sein. In weiterer Variante ist es möglich, den Anhänger mit einer Sicherungseinrichtung gegen Schleuderbewegungen auszustatten, die über eine geeignete Sensorik Gefahrenzustände, insbesondere Schleuderzustände, erkennt und die Radbremsen einzeln und zielgerichtet ansteuert. Bei einer solchen Schleuderbremse ist z.B. eine Betätigungseinrichtung (5) über Seilzüge (6) mit den Radbremsen (3) verbunden. Alternativ oder zusätzlich kann auch die Auflaufeinrichtung oder der Handbremshebel die Betätigungseinrichtung (5) bilden. In der gezeigten Ausführungsform mit der Schleuderbremse sind z.B. die Löseeinrichtungen (9) zwischen die Betätigungseinrichtung (5) der Schleuderbremse und die Radbremsen (3) in den Seilzügen (6) angeordnet.

Die Löseeinrichtung (9) kann unterschiedlich ausgebildet sein und in beliebiger Art auf den Seilzug (6) einwirken. In den gezeigten und bevorzugten Ausführungsformen ist die Löseeinrichtung (9) als Entlastungseinrichtung (10) für den Mantel (7) ausgebildet. Andere Varianten können auf das Seil (8) oder auf Seil (8) und Mantel (7) einwirken.

Die Löseeinrichtung (9) bzw. die Entlastungseinrichtung (10) kann an beliebiger Stelle des Seilzugs (6) angeordnet sein. In der Variante von Figur 1 ist sie an der Anschlussstelle des Seilzugs (6) an der Betätigungseinrichtung (5) angeordnet. Alternativ kann sie auch an der Anschlussstelle zur Radbremse (3) angeordnet sein. Ferner ist auch eine Anordnung innerhalb des Seilzugs (6) möglich, wie dies z.B. Figur 2 zeigt.

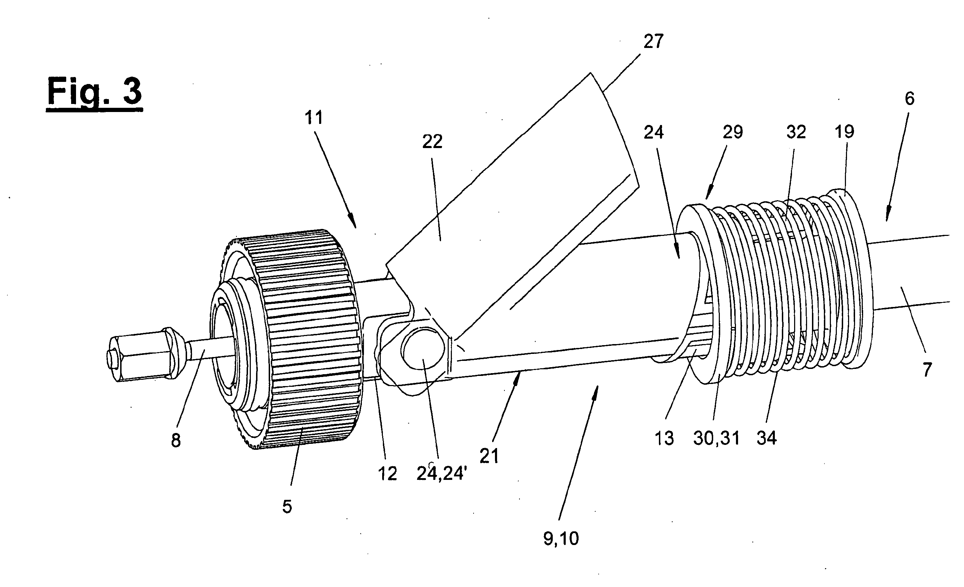

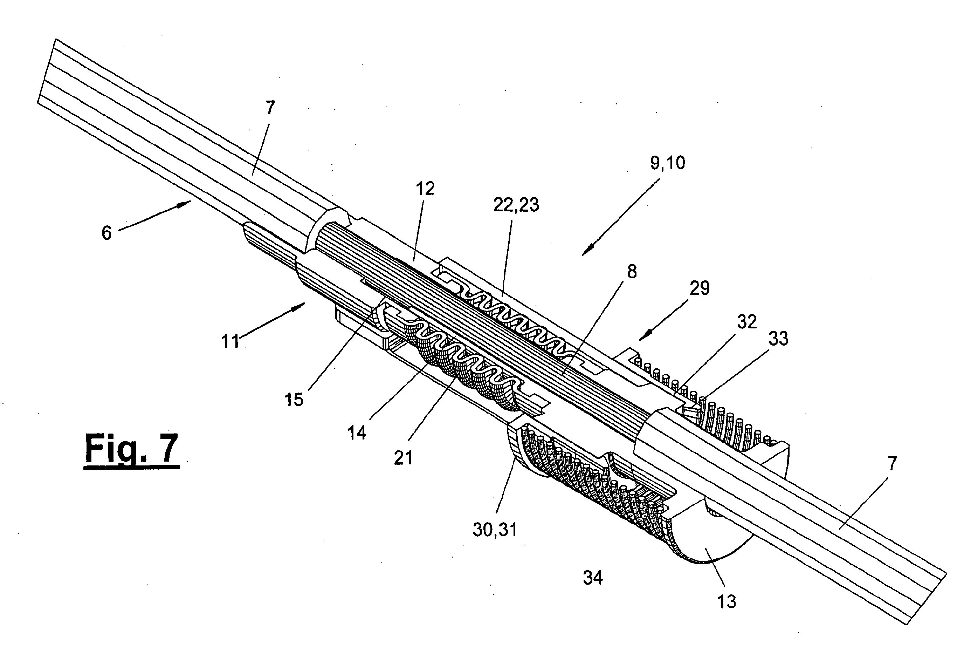

Figur 3 bis 9 und 10 bis 17 zeigen zwei Varianten der Löseeinrichtung (9) bzw. der Entlastungseinrichtung (10).

Der Mantel (7) ist im Bereich der Löseeinrichtung (9) bzw. der Entlastungseinrichtung (10) unterbrochen oder verkürzt. Die Entlastungseinrichtung (10) ersetzt hierbei ein Stück des Mantels (7). Im Normalbetrieb ist die Entlastungseinrichtung (10) steif und druckfest, wobei die im Mantel (7) übertragenen Druckkräfte ohne Beeinträchtigung der Mantel- und Seilzugfunktion weitergeleitet werden. Zur Entspannung des Seilzugs (6) verkürzt sich die Entlastungseinrichtung (10), was auch zu einer Verkürzung des angeschlossenen Mantels (7) und damit zu einem Weichmachen oder Erschlaffen des Seilzugs (6) führt. Diese Erschlaffung ist reversibel, so dass die Betriebsstellung und Normalfunktion wieder hergestellt werden kann.

Zur Erfüllung dieser Funktionen hat in den dargestellten Ausführungsbeispielen die Entlastungseinrichtung (10) eine geteilte Mantelfassung (11), die aus mindestens zwei Fassungsteilen (12,13) besteht, die in die Mantelerstreckung eingebunden sind. Bei einer innerhalb des Seilzugs (6) angeordneten Entlastungseinrichtung (10) sind an den äußeren Enden der beiden Fassungsteile (12,13) jeweils Mantelenden angeordnet und befestigt. Wenn die Entlastungseinrichtung (10) an einer Anschlussstelle des Seilzugs (6) angeordnet ist, kann eines der Fassungsteile (12,13) mit der Anschlussstelle, z.B. der Betätigungseinrichtung (5) oder der Radbremse (3) verbunden oder dort integriert sein, wobei das andere Fassungsteil mit einem Mantelende verbunden ist.

Die Entlastungseinrichtung (10) baut schlank und ist nur wenig dicker als der Mantel (7). Sie kann auch eine kurze Baulänge haben, die im wesentlichen durch die Fassungslänge der Mantelenden und den Verkürzungs- und Entspannungsweg bestimmt ist. Eine bau- und platzaufwändige Gehäuseumgebung ist entbehrlich. Die Entlastungseinrichtung (10) braucht auch keine stationäre Abstützung am Fahrzeug (1), die aber gleichwohl vorhanden sein kann.

Die geteilte Mantelfassung weist in beiden gezeigten Varianten ein lösbares Distanzteil (22) zwischen den Fassungsteilen (12,13) auf, welches in Betriebsstellung die über dem durchgehenden Seil (8) relativ zueinander beweglichen Fassungsteile (12,13) auf einem festen Abstand hält und in Lösestellung die Fassungsteile (12,13) freigibt sowie deren axiale Annäherung auf dem Seil (8) gestattet. Das Distanzteil (22) ist z.B. in den gezeigten Ausführungsformen als schwenkbarer Hebel (23) ausgebildet.

Alternativ kann das Distanzteil (22) ein anderweitig bewegliches Einsatzteil sein, welches in Betriebsstellung zwischen die Fassungsteile (12,13) gesteckt und zum Lösen in beliebiger Weise entfernt werden kann. Es kann z.B. eine Schiebeteil mit einer Kulissenführung sein. Das Distanzteil (22) kann auch in sich beweglich und z.B. faltbar sein.

Die Entlastungseinrichtung (10) weist eine Sicherungseinrichtung (29) auf, welche das Distanzteil (22) in Betriebsstellung und zur Abstützung der Fassungsteile (12,13) festhält. Die bewegliche Sicherungseinrichtung (29) kann in beliebiger Weise ausgebildet und betätigbar sein, um die Sperrstellung aufzuheben und ein Öffnen oder ein Entfernen des Distanzteils (22) zu ermöglichen. Figur 3 bis 9 und Figur 10 bis 17 zeigen zwei Varianten der Sicherungseinrichtung (29).

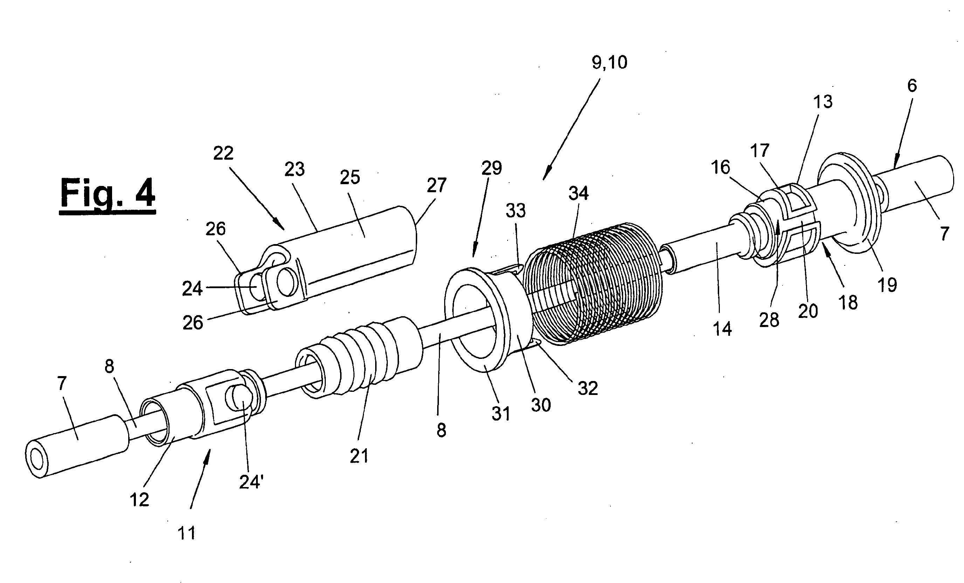

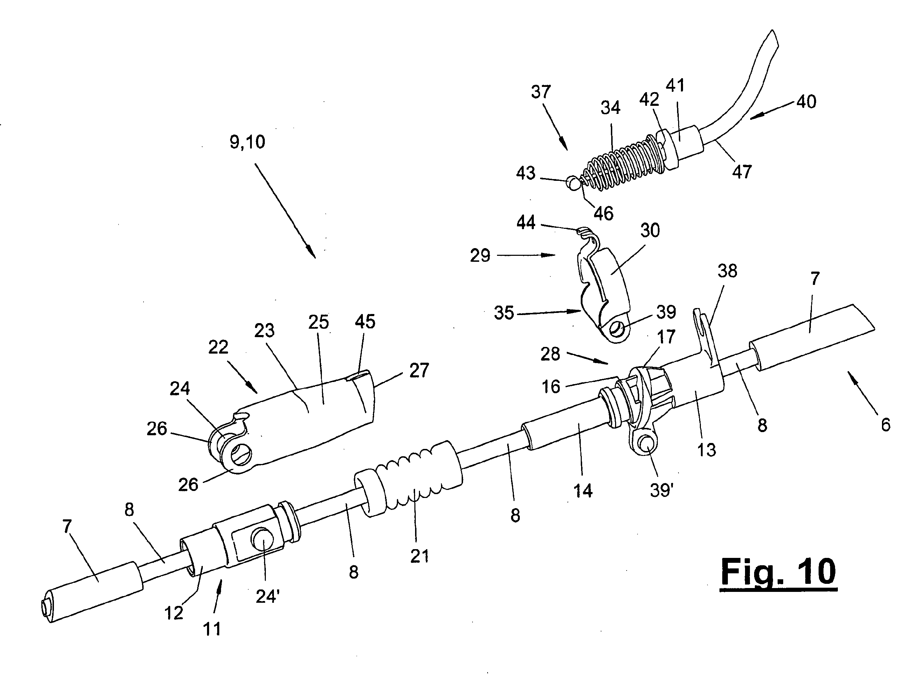

In beiden Ausführungsbeispielen der Figuren 3 bis 17 ist der schwenkbare Hebel (23) an dem einen Fassungsteil (12) über ein Drehlager (24,24') schwenkbar gelagert. Wie aus den Explosionsdarstellungen von Figur 4 und 10 hervorgeht, hat der Hebel (23) einen länglichen Hebelmantel (25), der einen im wesentlichen U-förmigen Querschnitt besitzt. Der Hebelmantel (25) kann z.B. eine seitlich offene Rohrform haben, wobei der Rohrmantel im Bereich der Mittelebene oder darunter geöffnet ist. Der Hebelmantel (25) kann einen runden, beispielsweise kreisrunden, oder prismatischen Querschnitt haben. In der gezeigten Ausführungsform ist der Querschnitt mittensymmetrisch ausgebildet. Er kann alternativ asymmetrisch und z.B. bereichsweise oval sein. Am Hebelmantel (25) sind ein oder mehrere, z.B. zwei axial abstehende Hebelarme (26) mit Lageraugen (24) zur Verbindungen mit den seitlich abstehenden Bolzen (24') des Lagers angeordnet. An der Stirnseite (27) des Hebels (23) kann der Hebelmantel (25) eine Anschrägung aufweisen.

Die beiden Fassungsteile (12,13) sind innseitig hohl und bieten eine Durchgangsöffnung für das freigelegte Seil (8). Das andere Fassungsteil (13) weist eine Hebelaufnahme (28) für den Hebel (23) auf, die insbesondere mit dessen Stirnseite (27) zusammenwirkt. Die Hebelaufnahme (28) kann ebenfalls eine der Stirnseite (27) entsprechende Anschrägung haben. Die Anschrägung weist vom Lager (24,24') weg. Sie ist lösegünstig ausgebildet und erlaubt eine Selbstöffnungsfunktion des Hebels (23). Die über den Mantel (7) axial auf die Anschrägung eingeleiteten Druckkräfte drücken in Lösestellung den Hebel (23) weg und lassen ihn in der in Figur 3 und 5 sowie Figur 14 und 15 gezeigten Weise von selbst aufschnappen. Dies ist möglich, wenn die nachfolgend näher beschriebene und vorzugsweise am Fassungsteil (13) angeordnete Sicherungseinrichtung (29) geöffnet ist.

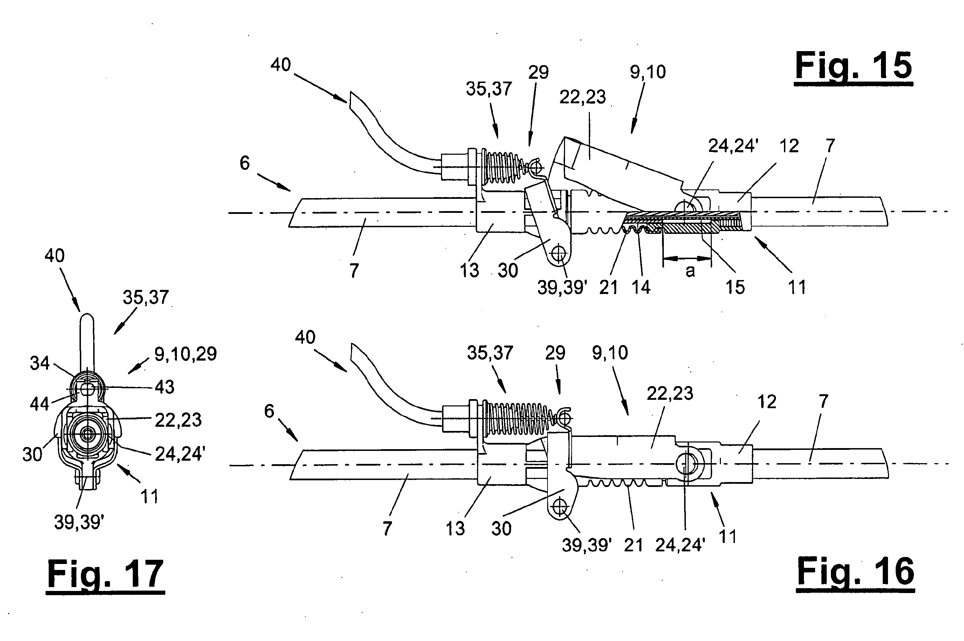

Wie aus der Explosionsdarstellung und den Längsschnitten von Figur 4 bis 6 sowie Figur 10, 12 und 15 hervorgeht, weist ein Fassungsteil (13) einen das Seil (8) umgebenden axialen Vorsprung (14) auf, der mit einer zugehörigen Aufnahmeöffnung (15) am anderen Fassungsteil (12) zusammenwirkt und dort eintaucht. Die Aufnahmeöffnung (15) hat eine Tiefe, die zumindest dem zur Seilzugentspannung erforderlichen Entlastungsspiel oder Verstellweg (a) gemäß Figur 15 entspricht. Bei geöffnetem Distanzteil (22) kann der Vorsprung (14) in die Aufnahmeöffnung (15) axial eintauchen, was zu einer entsprechenden Verkürzung der Gesamtlänge der Mantelfassung (11) und des Mantels (7) am Seilzug (6) um den Verstellweg (a) führt.

Über den Vorsprung (14) und die Aufnahmeöffnung (15) sind die Fassungsteile (12,13) für die Axialbewegung längs des Seils (8) relativ zueinander geführt. Die Zuordnung des Vorsprungs (14) und der Aufnahmeöffnung (15) zu den Fassungsteilen (12,13) kann auch umgekehrt sein. In weiterer Abwandlung kann anstelle des biegesteifen Vorsprungs (14) auch eine andere gegenseitige Axialführung Fassungsteile (12,13) vorhanden sein. Alternativ kann auf eine Axialführung verzichtet werden.

In beiden gezeigten Ausführungsformen ist der Vorsprung (14) außenseitig von einer elastischen schlauchförmigen Schutzhülle (21) dichtend umgeben, die zwischen den Fassungsteilen (12,13) angeordnet und mit ihren Enden dort angebunden ist. Die elastische Schutzhülle (21) verformt sich beim Entspannen des Seilzugs (6) und der Axialbewegung der Fassungsteile (12,13). Sie kann hierfür z.B. als elastischer Faltenbalg ausgebildet sein.

Der Hebelmantel (25) kann in seiner Formgebung an die Schutzhülle (21) angepasst sein und diese in der geschlossenen Betriebsstellung zumindest bereichweise umgeben. Er kann sie gegebenenfalls auch etwas federnd umklammern, wobei die Umschließung vorzugsweise nur so groß ist, dass sie die Selbstöffnung des Hebels (23) in Lösestellung nicht verhindert.

Das Fassungsteil (13) besitzt bei beiden Varianten im mittleren Bereich einen Bund (17) und eine vorgelagerte Stufe (16), welche die Hebelaufnahme (28) bildet und zum gegenüberliegenden Fassungsteil (12) weist. Die Stufenhöhe ist an die Dicke des Hebelmantels (25) angepasst. In Sperr- und Betriebsstellung schließt die Außenseite des Hebelmantels (25) mit der äußeren Mantelfläche des Bundes (17) ab.

Die Sicherungseinrichtung (29) weist in beiden Varianten ein Halteelement (30), z.B. eine Hülse auf, welches auf dem Fassungsteil (13) und dessen Bund (17) beweglich angeordnet ist und von einer rückstellenden Feder (34) beaufschlagt wird. Das Halteelement (30) kann zwischen einer Lösestellung und einer Sperrstellung hin und her bewegt werden und hält in der Sperrstellung den Hebel (23) in dessen abgeschwenkter Betriebsstellung zur Sicherung der Übertragung der Mantelkräfte fest. Vorzugsweise besteht dabei ein Formschluss, wobei die Hülse (30) in Sperr- und Betriebsstellung den vorderen Bereich und die Stirnseite (27) des Hebels (23) sowie die Hebelaufnahme (28) zumindest bereichsweise umgibt. In der Lösestellung gibt das Halteelement (30) den Hebel (23) frei.

Bei der Ausführungsform von Figur 3 bis 9 ist dem Bund (17) in Gegenrichtung eine Ausnehmung (18) oder Vertiefung nachgelagert, die anschließend an dem zum Mantel (7) weisenden Ende in ein radial erweitertes oder erhabenes, z.B. tellerförmiges Endstück (19) übergeht.

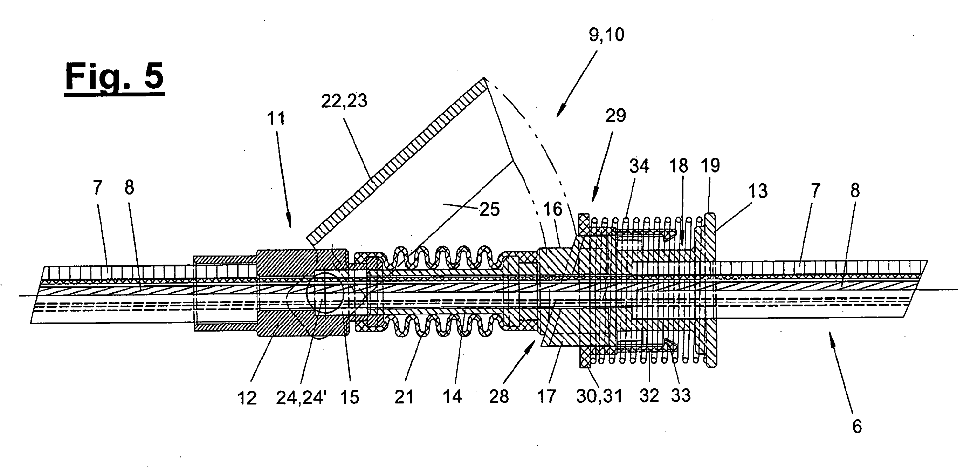

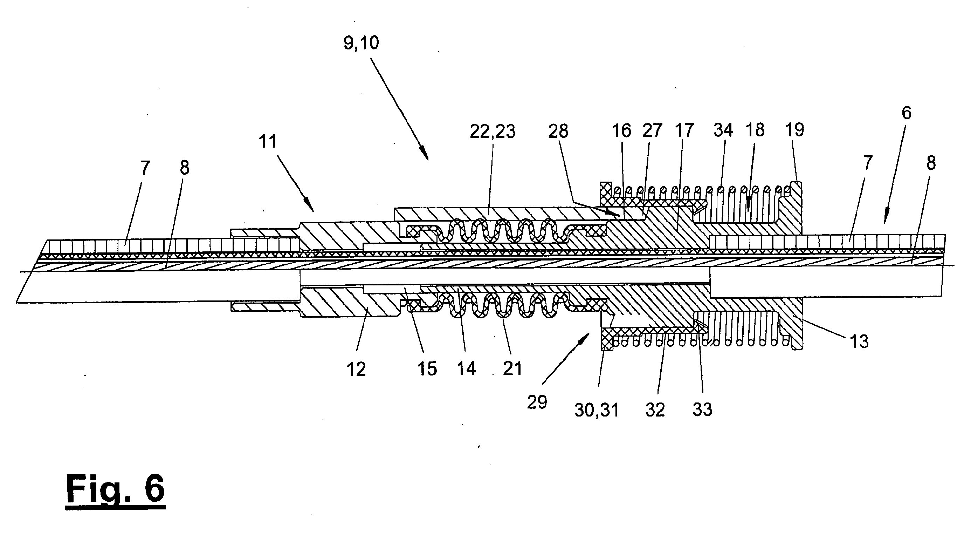

Die Hülse (30) ist auf dem Fassungsteil (13) und dessen Bund (17) längsbeweglich geführt und gelagert. Die Feder (34) ist z.B. eine Druckfeder, die zwischen einem vorderen Hülsenbund (31) und dem Endstück (19) gemäß Figur 5 und 6 eingespannt ist.

Nach vorn ist der Verschiebeweg der Hülse (30) begrenzt. Hierfür sind z.B. wegbegrenzende Fanghaken (33) vorhanden, die sich an den Enden von zwei nach hinten axial abstehenden, biegeelastischen Hülsenarmen (32) befinden und die in Betriebsstellung unter Federeinwirkung hinter den Bund (17) greifen, wie dies in Figur 6 dargestellt ist. Das Fassungsteil (13) kann für die Montage der Hülse (30) für jeden Hülsenarm (32) eine seitliche und axial sich erstreckende Einführnut (20) am Bund (7) aufweisen. Nach dem Aufschieben wird die Hülse (30) z.B. um 90 Grad gedreht, so dass die Fanghaken (33) hinter den Bund (17) greifen können.

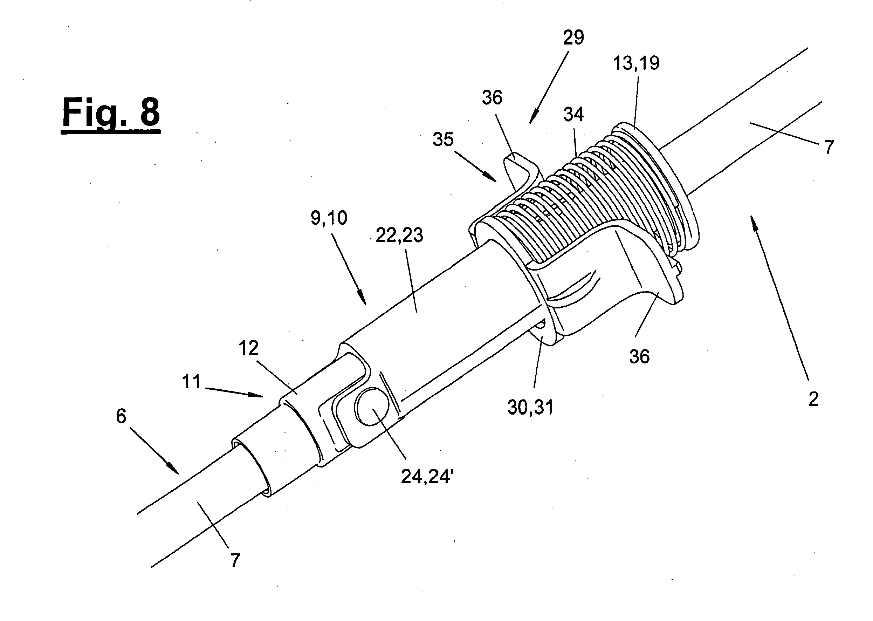

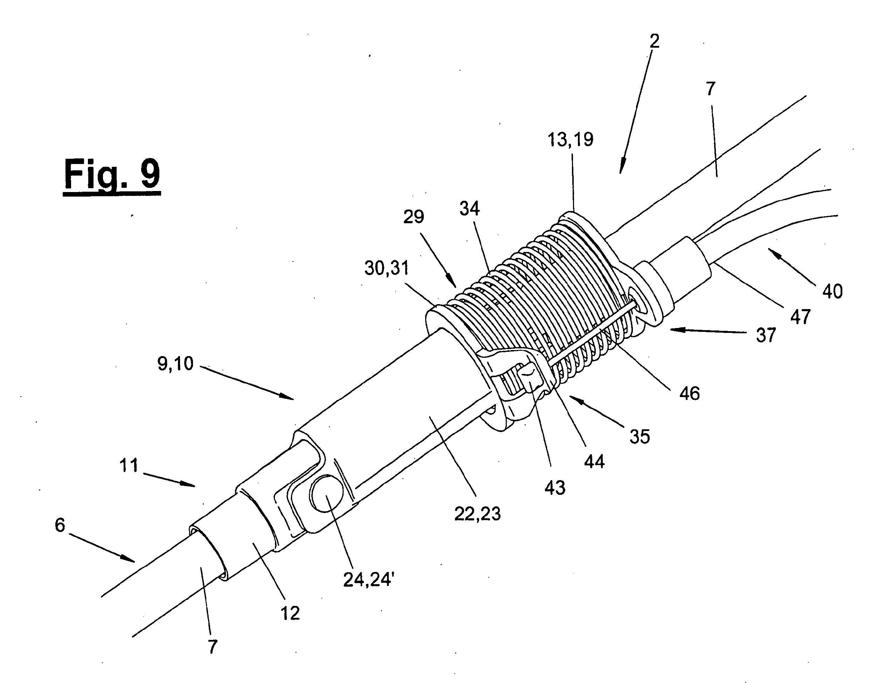

Die Sicherungseinrichtung (29) von Figur 3 bis 7 weist eine Stelleinrichtung (35) auf, zu der in Figur 8 und 9 zwei Varianten dargestellt sind. Zum Lösen der Entlastungseinrichtung (10) wird die Hülse (30) gegen die Federkraft zurückgezogen und außer Eingriff mit dem Hebel (23) gebracht, der dann in der in Figur 3 und 5 gezeigten Weise hochschwenken kann und die eingangs beschriebene axiale Annäherung der Fassungsteile (12,13) ermöglicht.

Das Aufschwenken des Hebels (23) kann mittels der Anschrägungen an der Stirnseite (27) und dem Bund (17) selbsttätig oder gegebenenfalls mit manueller oder anderweitiger mechanischer Unterstützung geschehen.

In der Variante von Figur 8 weist die Stelleinrichtung (35) zwei seitlich abstehende Griffe (36) auf, die mit dem Hülsenbund (31) verbunden sind. Über die Griffe (36) kann die Hülse (30) zum Lösen der Entlastungseinrichtung (10) manuell zurückgezogen werden.

In der Variante von Figur 9 weist die Stelleinrichtung (35) eine Fernbetätigung (37) auf. Diese besteht z.B. aus einem Seilzug (40), dessen Mantel (47) an einem seitlichen Ausleger des Fassungsteils (13) bzw. des Endstücks (19) abgestützt ist. Für das Zugseil (46) und dessen Kopfstück (43) ist am Hülsenbund (31) ein seitlich abstehendes Gegenlager mit einer hakenartigen Aufnahme (44) vorhanden. Über eine Betätigung des Stellzugs (40) kann die Hülse (30) zurückgezogen und die Entlastungseinrichtung (10) geöffnet werden.

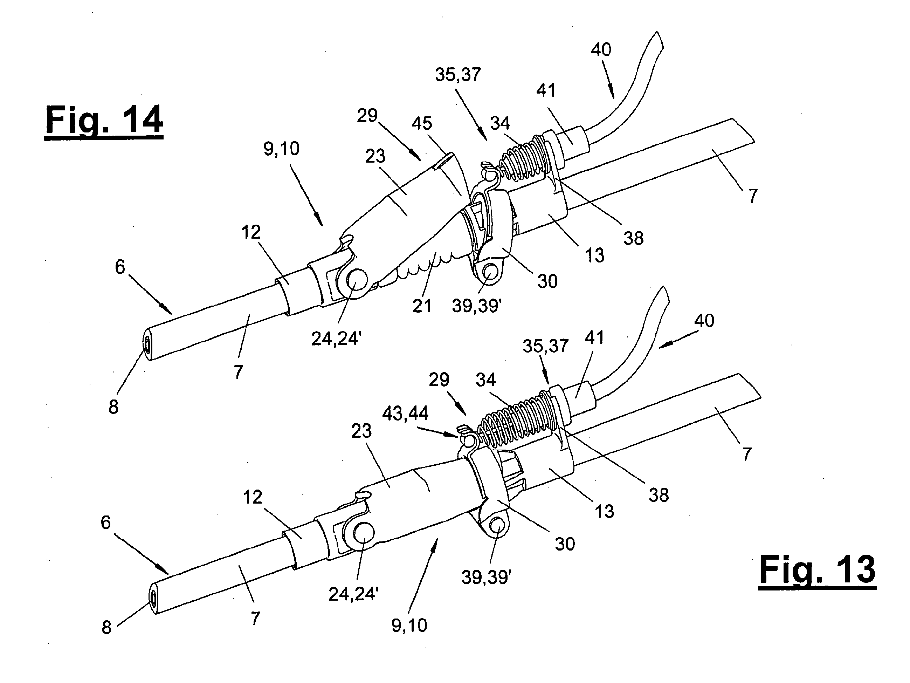

In Figur 10 bis 17 ist eine Variante der Löseeinrichtung (9) bzw. Entlastungseinrichtung (10) dargestellt, die sich vom ersten Ausführungsbeispiel hinsichtlich der Sicherungseinrichtung (29) und der Stelleinrichtung (35) unterscheidet. Das Halteelement (30) ist hier ebenfalls als Hülse (30) ausgebildet, die jedoch über ein Lager (39,39') am Fassungsteil (13) schwenkbar gelagert ist. Die Hülse (30) ist schellenartig ausgebildet und weist an ihrem unteren Ende zwei Laschen mit Lageraugen (39) auf, die mit Lagerbolzen (39') an der Unterseite des Fassungsteils (13) im Eingriff stehen. Die Hülse (30) kann in diesem Ausführungsbeispiel kürzer als in der ersten Variante sein und umschließt mit ihrem Mantel in Sperrstellung zumindest bereichsweise das vordere Ende des abgeschwenkten Hebels (23). Zum Öffnen der Entlastungseinrichtung (10) wird die Hülse (30) mit der Stelleinrichtung (35) zurückgeschwenkt in eine Öffnungsstellung gemäß Figur 14 und 15 und gibt den Hebel (23) frei. Der Hebel (23) kann am stirnseitigen Ende und an der Oberseite einen gewölbten Höcker (45) aufweisen, der das Entlanggleiten an der zurückgeschwenkten Hülse (30) erleichtert und ein Einhaken verhindert.

Die rückstellende Feder (34) drückt auch in diesem Ausführungsbeispiel das Halteelement (30) bzw. die Hülse in die vorgeschwenkte Sperrstellung. Die Feder (34) ist als Druckfeder und vorzugsweise als Schraubenfeder ausgebildet. Sie ist neben dem Fassungsteil (13) angeordnet und zwischen einer bügel- oder hakenförmigen Aufnahme (44) am oberen Rand der Hülse (30) und einer Abstützung (38) am hinteren Ende des Fassungsteils (13) eingespannt. Die Abstützung (38) wird von einem quer vom Fassungsmantel abstehenden Arm gebildet, der an seinem oberen Ende gabelförmig ausgebildet ist.

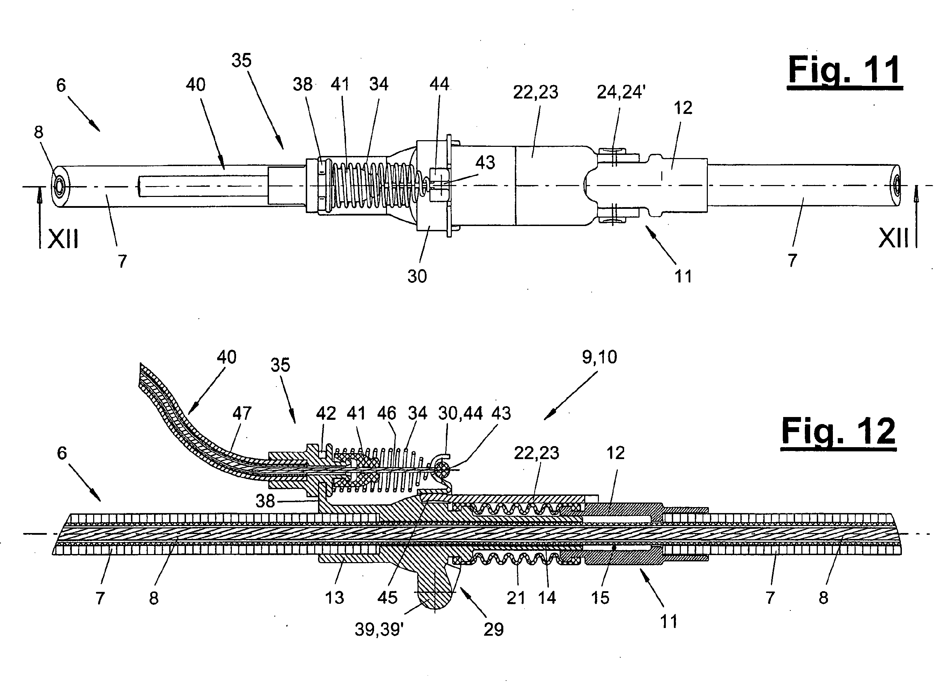

In dieser Ausführungsform kann die rückstellende Feder (34) mit der Stelleinrichtung (35) verbunden sein. Die Stelleinrichtung (35) ist in der Variante von Figur 10 bis 17 als Fernbetätigung (37) mit einem Seilzug oder Bowdenzug (40) ausgebildet, der zu einem an geeigneter Stelle im Fahrzeug angeordneten manuellen oder motorischen Betätigungselement (nicht dargestellt) führt. Der Seilzug (40) weist an seinem vorderen Ende eine stangenförmige Fassung (41) auf, die gemäß des Längsschnitts von Figur 12 zum einen an der Rückseite den Mantel (47) des Seilzugs (40) in einer Hülse aufnimmt und abstützt und die zum anderen an der Vorderseite einen Bund mit einem angeformten oder aufgesetzten Führungsstutzen zur Aufnahme und Führung der Schraubenfeder (34) aufweist. Zwischen dem Bund und der Hülse hat die Fassung (41) eine radiale Einschnürung (42), die auf die Öffnungsweite der gabelförmigen Abstützung (38) abgestimmt ist und dort eingesteckt und formschlüssig geführt werden kann. Hierüber findet eine Abstützung der Feder (34) und des Mantels (47) statt. Das Zugseil (46) ist durch die Feder (34) hindurchgeführt und am vorderen Ende mit einem verdickten, z.B. kugel- oder walzenförmigen Kopfstück (43) versehen. Die Feder (34) ist an diesem Ende konisch derart verjüngt, dass das vordere Federende sich am Kopfstück (43) abstützt. Das Kopfstück (43) kann an der hakenförmigen und mit einer geschlitzten Zugangsöffnung versehenen Aufnahme (44) eingehängt werden. Die Feder (34) wird hierbei gespannt und stützt sich mit ihrem Vorderende an der Aufnahme (44) ab. Die Feder (34) kann eine Vorspannung haben und drückt in der Ruhestellung die Hülse (30) nach vorn, wobei der Hülsenmantel auf dem Höcker (45) zu liegen kommt. Figur 12 zeigt diese Anordnung im Längsschnitt.

Beim Anziehen des Seilzugs (40) wird gegen die Kraft der Feder (34) die Hülse (30) zurückgeschwenkt und gibt den Hebel (23) frei. Dieser schwenkt selbsttätig nach oben in die in Figur 14 und 15 gezeigte Lösestellung, wobei der Seilzug (6) entspannt und sein Mantel (7) um den Verstellweg (a) über den Vorsprung (14) und die Aufnahmeöffnung (15) verkürzt werden kann.

In Abwandlung der gezeigten Ausführungsform kann die Stelleinrichtung (35) auch für eine manuelle Betätigung vor Ort ausgebildet sein. Hierfür kann z.B. das Zugseil (46) durch eine Zugstange mit einem Anschlag zur Begrenzung der Auszuglänge und mit einem Griffteil ausgebildet sein. Am Griff können die Zugstange und das Kopfstück (43) zurückgezogen und die Hülse (30) zurückgeschwenkt werden.

Im gezeigten Ausführungsbeispiel sind die Fassungsteile (12,13) und die Hülse (30) rohrförmig ausgebildet und besitzen einen kreisrunden Querschnitt. Die Formgebung kann alternativ auch eine andere sein.

Abwandlungen der dargestellten und beschriebenen Ausführungsformen sind im Rahmen der Erfindung in verschiedener Weise möglich. Dies betrifft z.B. die konstruktive Ausbildung und Anordnung der Mantelfassung (11) und ihrer Teile (12,13) sowie der Sicherungseinrichtung (29), des Halteelements (30) und des Distanzteils (22) und der Stelleinrichtung (35).

### BEZUGSZEICHENLISTE

- 1: Fahrzeug
- 2: Bremseinrichtung, Feststellbremse
- 3: Radbremse
- 4: Auslöser
- 5: Betätigungseinrichtung
- 6: Seilzug
- 7: Mantel, Schlauch
- 8: Seil
- 9: Löseeinrichtung, Notentriegelung
- 10: Entlastungseinrichtung
- 11: Mantelfassung
- 12: Fassungsteil
- 13: Fassungsteil
- 14: Vorsprung, Zunge
- 15: Aufnahmeöffnung
- 16: Stufe
- 17: Bund
- 18: Ausnehmung
- 19: Endstück
- 20: Einführnut
- 21: Schutzhülle, Balg
- 22: Distanzteil, Riegel
- 23: Hebel
- 24: Lager, Lagerauge
- 24': Lager, Lagerbolzen
- 25: Hebelmantel
- 26: Hebelarm
- 27: Stirnseite
- 28: Hebelaufnahme
- 29: Sicherungseinrichtung, Riegelsicherung
- 30: Haltelement, Hülse
- 31: Hülsenbund
- 32: Hülsenarm
- 33: Fanghaken
- 34: Feder
- 35: Stelleinrichtung
- 36: Griff
- 37: Fernbetätigung
- 38: Abstützung
- 39: Hülsenlager, Lagerauge
- 39': Hülsenlager, Lagerbolzen
- 40: Seilzug, Bowdenzug
- 41: Fassung
- 42: Einschnürung
- 43: Kopfstück
- 44: Aufnahme
- 45: Höcker
- 46: Mantel
- 47: Zugseil

- a: Verstellweg

## Patentansprüche

1. Seilzug für eine Bremseinrichtung (2) von Fahrzeugen (1), insbesondere eine Feststellbremse, bestehend aus einem Seil (8) mit einem umgebenden Mantel (7), wobei der Seilzug (6) eine Löseeinrichtung (9) für den Blockadefall aufweist, **dadurch gekennzeichnet, dass** die Löseeinrichtung (9) eine Entlastungseinrichtung (10) für den Mantel (7) aufweist, wobei der Mantel (7) im Bereich der Löseeinrichtung (9) unterbrochen oder verkürzt ist, wobei die Entlastungseinrichtung (10) eine geteilte Mantelfassung (11) mit einem lösbaren Distanzteil (22) zwischen den Fassungsteilen (12,13) aufweist und die Entlastungseinrichtung (10) eine Sicherungseinrichtung (29) für das Distanzteil (22) in der Betriebsstellung aufweist.

2. Seilzug nach Anspruch 1, **dadurch gekennzeichnet, dass** die Löseeinrichtung (9) an einer Stelle innerhalb des Seilzugs (6) angeordnet ist.

3. Seilzug nach Anspruch 1, **dadurch gekennzeichnet, dass** die Löseeinrichtung (9) an einem Anschlussende des Seilzugs (6) angeordnet ist.

4. Seilzug nach Anspruch 1, 2 oder 3, **dadurch gekennzeichnet, dass** das Distanzteil (22) als schwenkbarer Hebel (23) ausgebildet und an einem Fassungsteil (12) über ein Drehlager (24) schwenkbar gelagert ist.

5. Seilzug nach Anspruch 4, **dadurch gekennzeichnet, dass** das andere Fassungsteil (13) eine Hebelaufnahme (28) für die Stirnseite (27) des Hebels (23) und die Sicherungseinrichtung (29) aufweist.

6. Seilzug nach einem der vorhergehenden Ansprüche, **dadurch gekennzeichnet, dass** ein Fassungsteil (13) einen das Seil (8) umgebenden Vorsprung (14) und das andere Fassungsteil (12) eine zugehörige Aufnahmeöffnung (15) mit einer mindestens dem Entlastungsspiel entsprechenden Tiefe aufweist.

7. Seilzug nach einem der vorhergehenden Ansprüche, **dadurch gekennzeichnet, dass** zwischen den Fassungsteilen (12,13) eine elastische Schutzhülle (21) angeordnet ist, die den Vorsprung (14) dichtend umgibt.

8. Seilzug nach einem der vorhergehenden Ansprüche, **dadurch gekennzeichnet, dass** der Hebel (23) in der Betriebsstellung den Vorsprung (14) und die Schutzhülle (21) zumindest bereichsweise umgibt.

9. Seilzug nach einem der vorhergehenden Ansprüche, **dadurch gekennzeichnet, dass** die Stirnseite (27) des Hebels (23) und die Hebelaufnahme (28) eine lösegünstige Anschrägung aufweisen.

10. Seilzug nach einem der vorhergehenden Ansprüche, **dadurch gekennzeichnet, dass** die Sicherungseinrichtung (29) eine die Stirnseite (27) des Hebels (23) und die Hebelaufnahme (28) zumindest bereichsweise umgebende Hülse (30) aufweist, die an dem Fassungsteil (13) beweglich angeordnet ist und eine rückstellende Feder (34) aufweist.

11. Seilzug nach einem der vorhergehenden Ansprüche, **dadurch gekennzeichnet, dass** die Sicherungseinrichtung (29) eine Stelleinrichtung (35) aufweist.

12. Seilzug nach einem der vorhergehenden Ansprüche, **dadurch gekennzeichnet, dass** die Stelleinrichtung (35) mindestens einen Griff (36) oder eine Fernbetätigung (37) aufweist.

13. Bremseinrichtung, insbesondere Feststellbremse, für Fahrzeuge (1) mit mindestens einem zu den Radbremsen (3) führenden Seilzug (6) und einer Betätigungseinrichtung (5), wobei die Bremseinrichtung (2) eine am Seilzug (6) angeordnete Löseeinrichtung (9) für den Blockadefall aufweist, **dadurch gekennzeichnet, dass** der Seilzug (6) nach einem der Ansprüche 1 bis 12 ausgebildet ist.

## Claims

1. Cable pull for a braking device (2) for vehicles (1), in particular for a parking brake, comprising a cable (8) with a surrounding sheath (7), wherein the cable pull (6) has a release device (9) should jamming occur, **characterized in that** the release device (9) has a loading-relief device (10) for the sheath (7) wherein the sheath (7) is interrupted or shortened in the region of the release device (9), and wherein the loading-release device (10) has a divided sheath surround (11) with a releasable spacer part (22) between the surround parts (12, 13), and the loading-release device (10) has a securing device (29) for the spacer part (22) in the operating position.

2. Cable pull according to Claim 1, **characterized in that** the release device (9) is arranged at a location within the cable pull (6).

3. Cable pull according to Claim 1, **characterized in that** the release device (9) is arranged at a connection end of the cable pull (6).

4. Cable pull according to Claim 1, 2 or 3, **characterized in that** the spacer part (22) is designed as a pivotable lever (23) and is mounted on one surround part (12) such that it can be pivoted via a rotary bearing (24).

5. Cable pull according to Claim 4, **characterized in that** the other surround part (13) has a lever-accommodating means (28) for the end side (27) of the lever (23) and the securing device (29).

6. Cable pull according to one of the preceding claims, **characterized in that** one surround part (13) has a protrusion (14), which surrounds the cable (8), and the other surround part (12) has an associated accommodating opening (15) with a depth corresponding at least to the loading-relief play.

7. Cable pull according to one of the preceding claims, **characterized in that** an elastic protective enclosure (21) is arranged between the surround parts (12, 13) and surrounds the protrusion (14) with sealing action.

8. Cable pull according to one of the preceding claims, **characterized in that** the lever (23), in the operating position, surrounds the protrusion (14) and the protective enclosure (21) at least in certain regions.

9. Cable pull according to one of the preceding claims, **characterized in that** the end side (27) of the lever (23) and the lever-accommodating means (28) have bevelling which is advantageous for release.

10. Cable pull according to one of the preceding claims, **characterized in that** the securing device (29) has a sleeve (30) which surrounds the end side (27) of the lever (23), and the lever-accommodating means (28), at least in certain regions, is arranged in a movable manner on the surround part (13) and has a restoring spring (34).

11. Cable pull according to one of the preceding claims, **characterized in that** the securing device (29) has a control device (35).

12. Cable pull according to one of the preceding claims, **characterized in that** the control device (35) has at least one handle (36) or a remote-actuating means (37).

13. Braking device, in particular parking brake, for vehicles (1), having at least one cable pull (6) leading to the wheel brakes (3), and having an actuating device (5), wherein the braking device (2) has a release device (9) which is arranged on the cable pull (6) to deal with jamming, **characterized in that** the cable pull (6) is designed according to one of Claims 1 to 12.

## Revendications

1. Câble de commande pour un dispositif de freinage (2) de véhicules (1), en particulier un frein de stationnement, constitué d'un câble (8) avec une gaine extérieure (7), le câble de commande (6) présentant un dispositif de libération (9) dans le cas d'un blocage, **caractérisé en ce que** le dispositif de libération (9) présente un dispositif de décharge (10) pour la gaine (7), la gaine (7) étant interrompue ou raccourcie dans la région du dispositif de libération (9), le dispositif de décharge (10) présentant une monture de gaine divisée (11) avec une pièce d'écartement détachable (22) entre les parties de monture (12, 13), et le dispositif de décharge (10) présentant un dispositif de fixation (29) pour la pièce d'écartement (22) dans la position fonctionnelle.

2. Câble de commande selon la revendication 1, **caractérisé en ce que** le dispositif de libération (9) est disposé en un endroit à l'intérieur du câble de commande (6).

3. Câble de commande selon la revendication 1, **caractérisé en ce que** le dispositif de libération (9) est disposé à une extrémité de raccordement du câble de commande (6).

4. Câble de commande selon la revendication 1, 2 ou 3, **caractérisé en ce que** la pièce d'écartement (22) est réalisée sous forme de levier pivotant (23) et est montée de manière pivotante sur une partie de monture (12) par le biais d'un palier pivotant (24).

5. Câble de commande selon la revendication 4, **caractérisé en ce que** l'autre partie de monture (13) présente un logement de levier (28) pour le côté frontal (27) du levier (23) et le dispositif de fixation (29).

6. Câble de commande selon l'une quelconque des revendications précédentes, **caractérisé en ce qu'**une partie de monture (13) présente une saillie (14) entourant le câble (8) et l'autre partie de monture (12) présente une ouverture de réception associée (15) avec une profondeur correspondant au moins au jeu de décharge.

7. Câble de commande selon l'une quelconque des revendications précédentes, **caractérisé en ce qu'**une enveloppe de protection élastique (21) est disposée entre les parties de monture (12, 13) et entoure hermétiquement la saillie (14).

8. Câble de commande selon l'une quelconque des revendications précédentes, **caractérisé en ce que** le levier (23) entoure au moins en partie la saillie (14) et l'enveloppe de protection (21) dans la position fonctionnelle.

9. Câble de commande selon l'une quelconque des revendications précédentes, **caractérisé en ce que** le côté frontal (27) du levier (23) et le logement de levier (28) présentent un chanfrein favorisant la libération.

10. Câble de commande selon l'une quelconque des revendications précédentes, **caractérisé en ce que** le dispositif de fixation (29) présente une douille (30) entourant au moins en partie le côté frontal (27) du levier (23) et le logement de levier (28), qui est disposée de manière mobile sur la partie de monture (13) et qui présente un ressort de rappel (34).

11. Câble de commande selon l'une quelconque des revendications précédentes, **caractérisé en ce que** le dispositif de fixation (29) présente un dispositif de réglage (35).

12. Câble de commande selon l'une quelconque des revendications précédentes, **caractérisé en ce que** le dispositif de réglage (35) présente au moins une poignée (36) ou un actionnement à distance (37).

13. Dispositif de freinage, notamment frein de stationnement, pour véhicules (1) comprenant au moins un câble de commande (6) conduisant aux freins de roue (3) et un dispositif d'actionnement (5), le dispositif de freinage (2) présentant un dispositif de libération (9) en cas de blocage, disposé sur le câble de commande (6), **caractérisé en ce que** le câble de commande (6) est réalisé selon l'une quelconque des revendications 1 à 12.
